# Europäisches Patentamt

## European Patent Office

## Office européen des brevets

(11) Publication number: **0 052 519**
**B1**

(12)

# EUROPEAN PATENT SPECIFICATION

(45) Date of publication of patent specification: **04.02.87**

(51) Int. Cl.⁴: **G 11 B 5/09** // G06F11/10

(21) Application number: **81305443.4**

(22) Date of filing: **18.11.81**

(54) **Pulse code modulation signal recording and reproducing.**

(30) Priority: **18.11.80 JP 162176/80**

(43) Date of publication of application:
**26.05.82 Bulletin 82/21**

(45) Publication of the grant of the patent:
**04.02.87 Bulletin 87/06**

(84) Designated Contracting States:
**DE FR GB IT NL**

(56) References cited:
**DE-A-2 107 656**
**DE-A-2 903 998**
**US-A-3 887 941**

**Patent Abstracts of Japan, Vol. 4. No. 153, 25 October 1980, page 69 P 33**

**Patents Abstracts of Japan, Vol. 4, No. 107, 31 July 1980, page 85 P 21**

(73) Proprietor: **SONY CORPORATION**
**7-35 Kitashinagawa 6-Chome Shinagawa-ku Tokyo 141 (JP)**

(73) Proprietor: **Kabushiki Kaisha Toshiba**
**72, Horikawa-cho Saiwai-ku Kawasaki-shi Kanagawa-ken 210 (JP)**

(72) Inventor: **Hoshimi, Susumu**
**23 Nakao-cho Asahi-ku, Yokohama-shi Kanagawa-ken (JP)**
Inventor: **Kojima, Tadashi**
**20-49 Kugo-cho 6-chome Yokosuka-shi Kanagawa-ken (JP)**

(74) Representative: **Thomas, Christopher Hugo et al**
**D Young & Co 10 Staple Inn London WC1V 7RD (GB)**

(56) References cited:
**JOURNAL OF THE SOCIETY OF MOTION PICTURE AND TELEVISION ENGINEERS; vol. 83, no. 2, February 1974, pages 100-104 and vol. 83, no. 6, June 1974, page 511, Scarsdale New York, US DANN: "A unique timing-reference system for Broadcast Videotape Recorders"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to pulse code modulation (PCM) signal recording and reproducing systems.

It is now known to use video tape recorders (VTRs) and video discs for recording and reproducing an analog signal such as an audio signal which has been digitized by being pulse code modulated.

Such recording and reproducing systems are advantageous for performing high quality copying or dubbing. They also greatly improve the noise and distortion characteristics, as well as reducing wow and flutter. In a conventional analog system recorder there is a deterioration of the tone quality each time there is copying. On the other hand, PCM recording and reproducing systems allow copying which is free from such deterioration because the copying is done with a digital signal. As PCM recording and reproducing systems generally include data correcting functions, the reproduced digital output to which the error correcting process has been applied can be re-recorded and high quality copying is possible.

In such PCM recording and reproducing systems, during normal recording, a crystal oscillator is provided to produce a master clock signal which is frequency-divided to produce various clock signals which are necessary for recording. During normal reproduction, the synchronizing signal is extracted from the reproduced PCM signal and used to control a phase locked loop (PLL) circuit that includes a voltage controlled oscillator (VCO) which produces a master clock signal which is frequency divided so as to obtain various clock signals necessary for the reproduction process. Thus, when recording or reproducing is independently performed, even if the respective systems are operated with independent clock signals, there will be no problems.

However, when copying is to be performed with the digital signal, the systems must be synchronized because the digital data is transmitted or received between the reproducing and recording systems.

For this purpose, a PLL circuit has generally been provided in the recording system (cf. US—A—3887941), and a word clock signal of the recording system is phase-compared with a word clock signal of the reproducing system as a reference to obtain synchronization of the recording system with the reproducing system. However, to get high accuracy synchronization, it is necesary to increase the gain of a dc amplifier to amplify the output of a low-pass filter of the PLL circuit. Even a tiny amount of noise influences the VCO in the PLL circuit which produces the master clock signal for the reproducing system during copying, and this causes malfunctioning of the reproducing equipment. That is to say, there is a problem in maintaining synchronization of the PCM signal recording and reproducing apparatus during copying.

German patent specification DE—A—29 03 998 (GB—B—2 016 756) discloses a system of this general type comprising first and second signal processing means and first to third clock signal generating means for producing recording and reproducing clock signals, but has no disclosure concerning synchronization during copying.

According to the present invention there is provided a PCM signal recording and reproducing system comprising:

first signal processing means for processing a recording signal into a predetermined PCM signal;

second signal processing means for processing a reproduced PCM signal into said recording signal;

first clock signal generating means for generating a master clock signal synchronized to said reproduced PCM signal;

second clock signal generating means for generating at least one recording clock signal from said master clock signal, said recording clock signal being supplied to said first signal processing means; and

third clock signal generating means for generating at least one reproducing clock signal from said master clock signal, said reproducing clock signal being supplied to said second signal processing means;

characterised by:

said second clock signal generating means being supplied with said master clock signal in a copying mode and deriving therefrom said recording clock signal for supply to said first signal processing means, said second clock signal generating means not including a phase locked loop;

first comparing means for comparing the phases of said recording clock signal and said reproducing clock signal and for producing a control signal during said copying mode; and

said second or third clock signal generating means including a first controllable frequency dividing means for dividing said master clock signal and the dividing ratio being increased or decreased by said control signal so that said recording and reproducing clock signals are synchronized with each other.

The characterising features of the invention compensate for phase deviation caused by noise or the like in the course of copying, whereby sychronization of high accuracy can be achieved during copying.

The invention will now be described by way of example with reference to the accompanying drawings, in which:

Figures 1A to 1E are diagrams illustrating the signal formats in a PCM signal recording system;

Figure 2 is a block diagram for explaining and illustrating a PCM signal recording system;

Figure 3 is a block diagram of an embodiment of the invention;

Figure 4 is a block diagram of a digital phase comparator for use in an embodiment of the invention;

Figures 5A to 5J show waveforms at different points in the embodiment of Figure 3; and

Figure 6 is a block diagram of an alternative digital phase comparator for use in an embodiment of the invention.

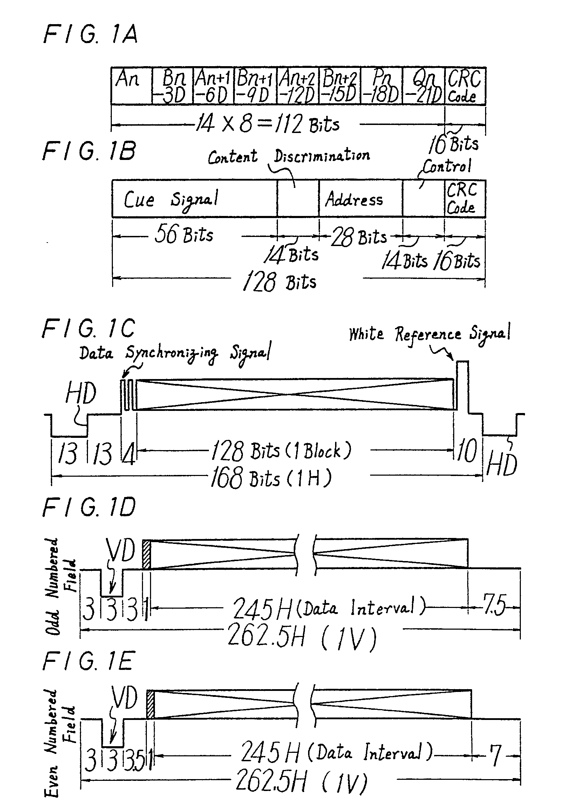

This invention can be applied to audio PCM recording and reproducing apparatus by simply adding a PCM processor in the form of an adapter to a rotary head VTR as now in common use. It has been proposed in PCM adapters to convert audio PCM data to a signal mode which is similar to a television signal and has a standard format which is illustrated in Figures 1A to 1D.

Figure 1A shows a data block which is to be inserted into one horizontal interval (1H), and Figure 1B illustrates a control block which is to be inserted into a first 1H interval of each vertical interval or field (1V). Audio signals of two channels are respectively sampled at a sampling frequency $f_s=44.056$ kHz and converted to data words $A_1$ to $B_1$ having fourteen bits each, two check words $P_1$ and $Q_1$ of fourteen bits each for error correction and a cyclic redundancy check (CRC) code word of sixteen bits for detecting the presence or absence of errors in the data having a total of eight words. The length of one block is thus 128 bits. The check words $P_1$ and $Q_1$ for error correction are formed from the data format of six words and the resulting eight data words are interleaved word by word. In Figure 1A, suffixes associated with each word show the interleaving relationship where a unit delay amount is represented by D blocks. The control block illustrated in Figure 1B comprises a cue signal of fifty-six bits, then a content discriminating signal of fourteen bits, then an address signal of twenty-eight bits, then a control signal of fourteen bits and lastly a CRC code of sixteen bits for error-detection of the prior signals.

As shown in Figure 1C, into a 1H (168 bits) interval specified by a horizontal synchronizing signal HD there is inserted one block of 128 bits and a data synchronizing signal is added to the beginning and a white reference signal is added to the end. As shown in Figure 1D, a data interval is selected as 245H within one field (1V). Additionally there are a total of 9H (9.5H for an even-numbered field) of equalizing pulse intervals including a vertical synchronizing signal (VD) interval, and an interval of 7.5H (7H for an even-numbered field). There is also a head switching interval shown by the cross-hatched section. The control block is inserted into the first 1H interval.

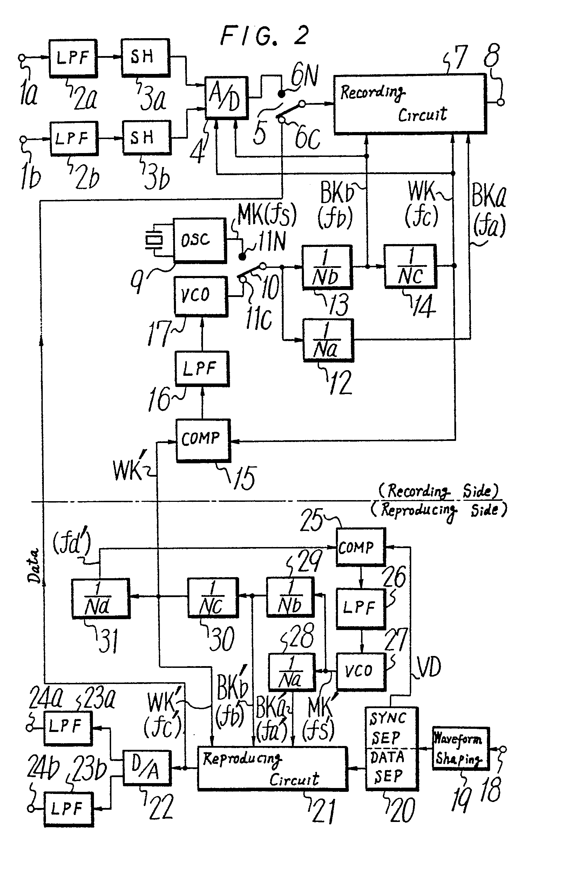

Figure 2 illustrates a PCM adapter of the type mentioned above and illustrates constructions of recording and reproducing clock signal generator portions. During recording, the audio signal of the two channels received at input terminals 1a and 1b in Figure 2 is bandwidth limited by low-pass filters 2a and 2b and sampled by sample and hold circuits 3a and 3b at a selected frequency. The sampled output is supplied to an analog-to-digital (A/D) converter 4 in which one sample of each channel is converted to a PCM data signal of fourteen bits. The PCM data signal supplied from the A/D converter 4 is supplied through contact 6N of a switch 5 to a recording circuit 7 so that at a video output terminal 8 a video signal of the format as shown in Figure 1 will exist. From the terminal 8 it is supplied to a video input terminal of a VTR and recorded on a recording medium such as magnetic tape. The recording circuit 7 includes an error-correction encoder, a memory for interleaving, a time-base compression circuit, and a CRC code addition circuit.

During normal recording, a master clock signal MK at a frequency $f_s$ is generated by a crystal oscillator 9 and is supplied, through a contact 11N of a switch 10 to counters 12 and 13. The counter 12 produces a bit clock signal BKa having a frequency $f_a$ which is a 1/Na frequency-divided output of the freqeuency $f_s$. The counter 13 generates a bit clock signal BKb having a frequency $f_b$ which is a 1/Nb frequency-divided output of the frequency $f_s$. The output of the couple 13 is further frequency-divided by a counter 14 in which a two-words clock signal WK having a frequency $f_c$ which is one-half the frequency of the word clock signal is produced.

The bit clock signal BKa is used as the bit clock signal for the read portion of the recording circuit 7 and the bit clock signal BKb having a frequency $f_b$ (which is less than $f_a$) is used as the bit clock signal for the write portion of the recording circuit 7. The A/D converter 4 receives the bit clock signal BKb and the two-words clock signal WK.

During reproduction, a video input terminal 18 of the PCM adapter receives a reproduced signal which has been reproduced from tape in the VTR and which is produced at the video output terminal. The signal is supplied from the terminal 18 through a waveform shaping circuit 19 to a data and synchronizing signal separator circuit 20. The data separated in the separator circuit 20 are supplied to a reproducing circuit 21 and the separated vertical synchronizing signal VD is supplied to a phase comparator 25. The reproducing circuit 21 includes a CRC code checker circuit, a memory for time-base extension and de-interleaving and an error-correction decoder. The output data of the reproducing circuit 21 are supplied to a digital-to-analog (D/A) converter 22 in which analog outputs for each channel are produced which are supplied through low-pass filters 23a and 23b to output terminals 24a and 24b.

The clock signal generator for the reproducing equipment includes the PLL circuit for a VCO27 which receives as a controlling voltage the output of the phase comparator 25 which is supplied through a low-pass filter 26 to the VCO27. Counters 28, 29, 30 and 31 are connected as shown. The VCO27 produces a reproduction side master clock signal MK' with a frequency $f_s'$ and the counter 28 frequency-divides this master clock signal MK' by multiplying it by 1/Na thereby generating a bit clock signal BKa' at a frequency $f_a'$. The counter 29 frequency-divides this master clock signal MK' by multiplying it by 1/Nb to produce a bit clock signal BKb' at a frequency $f_b'$.

The bit clock signal BKb' is frequency-divided by multiplying it by 1/Nc in the counter 30 thereby forming a two-words clock signal WK' at a fre-

quency $f_c'$. The counter 31 frequency-divides the two-words clock signal WK' by multiplying it by 1/Nd so to form a signal at a field frequency $f_d'$ which is supplied to the phase comparator 25. In the PLL arrangement thus described, it is possible to produce each clock signal in synchronism with the reproducing signal. The bit clock signal BKa' is employed as the write portion bit clock signal for the reproducing circuit 21, and the bit clock signal BKb' having a frequency $f_b'$ (which is less than $f_a'$) is employed as the read portion bit clock signal for the reproducing circuit 21.

When dubbing is to be performed in a stage where the signal is digital by utilizing the PCM adapter described above, a first VTR will be used to reproduce a magnetic tape on which a signal has already been recorded and a second VTR will be used to record again the above-described signal on another magnetic tape for dubbing. Of course, in place of the first VTR, a video disc player which can reproduce a video disc and which can only perform reproduction may be utilized. During copying, the switches 5 and 10 provided on the recording portion of the PCM processor are moved to engage copy mode contacts 6C and 11C and the reproduced output of one VTR is supplied from the video input terminal 18 of the reproducing mode of the PCM processor. Data which comprises serial bits which have been corrected for error and which are derived from the reproducing circuit 21 are supplied through the switch 5 to the recording circuit 7, and the video signal appearing at the output terminal 8 is recorded by the other VTR. Accordingly, the clock signal to perform the data processing in the recording circuit 7 must be synchronized with the data fed from the reproducing circuit 21.

The circuit illustrated in Figure 2 is arranged such that separating the crystal oscillator 9 by moving the switch 10 from ON to OFF and using an analog PLL circuit comprising a phase comparator 15, a low-pass filter 16, a VCO17 and the counters 13 and 14, allows the two-words clock signals WK' and WK of the reproducing and recording portions to be phase-compared and the VCO17 will produce the master clock signal in synchronism with the data transferred.

However, during copying, since the data are transmitted and received as serial bits, the clock signal of the recording and reproducing portions must be synchronized with high accuracy. To accomplish this, the gain of the dc amplifier for amplifying the output of the low-pass filter must be increased. The result is that even a tiny amount of noise is apt to be amplified and the VCO17 is influenced by such noise which easily causes malfunctions such as unlocking of the phase. If phase unlock occurs, the data cannot be correctly transferred and the copied magnetic tape will be reproduced with abnormal sounds. Moreover, the low-pass filter 16 and the VCO17 and other circuits will not be very suitable for manufacture as integrated circuits because of the capacitors required.

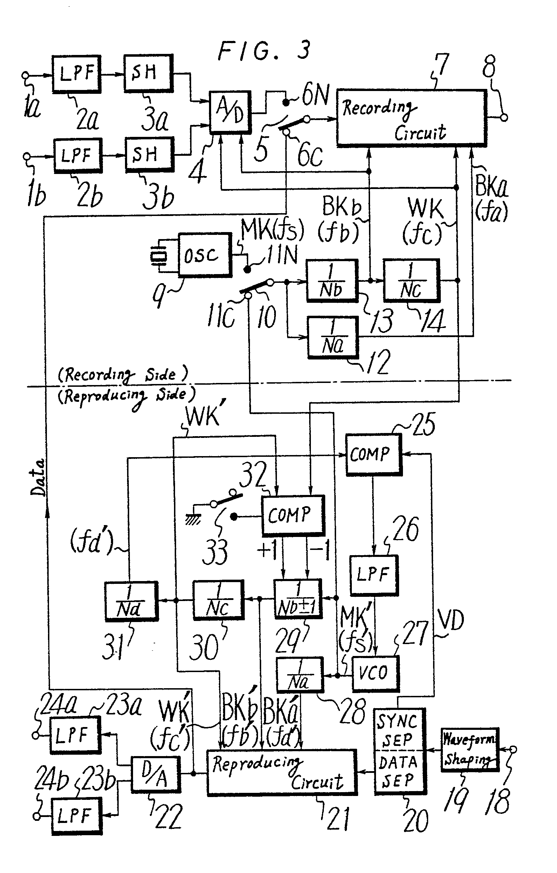

Figure 3 shows an embodiment of the invention in which the circuit arrangement used during normal operation is the same as that illustrated in Figure 2 and the recording and reproducing operations are performed independently as in Figure 2. During copying, the switch 5 is moved so that the data from the reproducing circuit 21 are supplied through the copy mode contact 6C to the recording circuit 7, and the master clock signal MK' produced by the VCO27 on the reproducing side is supplied through the copy mode contact 11C of the switch 10 to the counters 12 and 13. In the embodiment, the counter 29 is a programmable counter and a digital phase comparator 32 is also provided. The compared output changes the frequency dividing ratio of the programmable counter 29 to three ratios 1(Nb+1), 1/Nb and 1/(Nb−1). A switch 33 is provided for the digital phase comparator 32 so that only during copying will the digital phase comparator 32 produce a control output to change the frequency dividing ratio of the programmable counter 29 and in other modes, the control output is not produced but the frequency dividing ratio of the programmable counter 29 is fixed at 1/Nb. The digital phase comparator 32 receives the two-word clock signal WK' of the reproducing side produced by the counter 30 and the two-word clock signal WK from the recording side generated by the counter 14. The phase difference produces a control signal output to change the frequency dividing ratio of the programmable counter 29. If the frequency $f_b'$ of the bit clock signal BKb' when the frequency dividing ratio of the programmable counter 29 is 1/Nb is taken as a reference, the ratio of 1/(Nb+1) lowers the frequency and the ratio of 1/(Nb−1) raises the frequency. The embodiment of Figure 3 illustrates a circuit in which the recording signal is taken as the reference and controls the phases of the two-words clock signal WK' of the reproducing side and the bit clock signal BKb' of the read side.

It is also possible for the programmable counter 29 and the digital phase comparator 32 to be provided on the recording side so as to control the frequency dividing ratio of the counter 29 on the recording side. When the phase comparator 32 is provided on the reproducing side, however, as seen in the embodiment, the following advantages result. First, when an audio PCM signal from other apparatus and the reproduced data are mixed for recording it is preferable that the frequency dividing ratio of the counter for generating the recording side clock signal 15 constant since the recording side is generally treated as of primary importance. Second, when the output data of the A/D converter 4 and the reproduced data are mixed, jitter occuring during each clock signal on the recording side can be reduced.

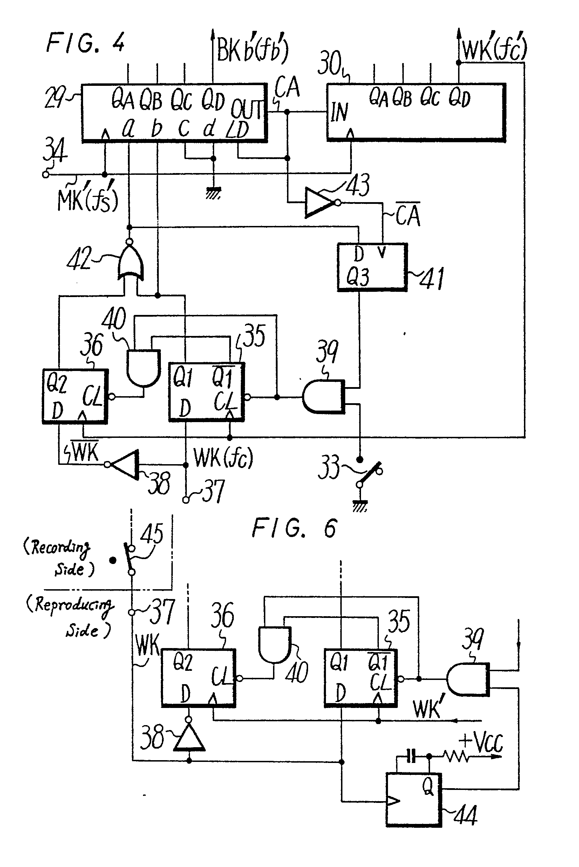

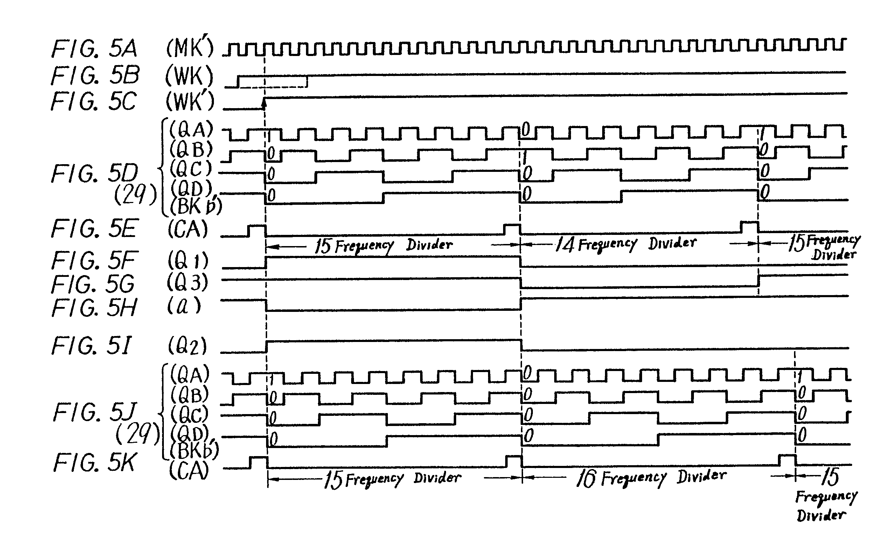

An explanation will be given of one specific example of a synchronizing circuit for the digital phase comparator 32 of the embodiment, with reference to Figures 4 and 5.

In this example, the counter 29 is formed of a synchronizing presettable 4-bit binary counter and the counter 30 is formed of a synchronized 4-bit binary counter. The clock signal inputs of the counters 29 and 30 are received from the master clock signal MK' of the reproducing side which is supplied from a terminal 34 and a carry output CA of the counter 29 is supplied to the counter 30 thereby producing the bit clock signal BKb' at an output terminal $Q_D$ of the counter 29 and the two-words clock signal WK' at an output terminal $Q_D$ of the counter 30. In this example, Nb=15 and Nc=16, and the frequency dividing ratio of the counter 29 is varied by a preset input at terminals (abcd) to the counter 29. If the preset input (abcd) is (0000), Nb=14. The carry output CA of the counter 29 is supplied to a load terminal LD so as to load a predetermined preset input. For clock signal inputs for each of D-type flip-flops 35 and 36 there is supplied the two-words clock signal WK' appearing at the output terminal $Q_D$ of the counter 30. For a data input of the flip-flop 35 there is supplied the two-words clock signal WK of the recording side from a terminal 37, and for a data input for the flip-flop 36 there is supplied the two-words clock signal $\overline{WK}$ inverted by an inverter 38. To clear terminals CL of the flip-flops 35 and 36 there are supplied the outputs of AND gates 39 and 40. When the outputs of the AND gates 39 and 40 are "1" (high level), the flip-flops 35 and 36 are made operative and when these outputs are "0" (low level), the flip-flops 35 and 36 are cleared.

To the AND gate 39 is supplied a signal which can be changed to "1" by the switch 33 during copying and an output of an output terminal $Q_3$ of a D-type flip-flop 41. To the AND gate 40 are supplied an output of the AND gate 39 and an output derived from an output terminal $\overline{Q_1}$ of the flip-flop 35. Outputs derived from output terminals $Q_1$ and $Q_2$ of the flip-flops 35 and 36 are supplied to a NOR gate 42. For the preset input $a$ of the counter 29 there is supplied an output of the NOR gate 42 and for the preset input $b$, there is supplied the output from the output terminal $Q_1$ of the flip-flop 35. The output of the NOR gate 42 is supplied to the flip-flop 41 as a data input and a clock signal input is supplied from an inverter 43 as a carry output $\overline{CA}$.

When the two-words clock signal WK' is phase lagging the two-words clock signal WK, a detection output "1" appears at the output terminal $Q_1$ of the flip-flop 35. On the contrary, when the phase of the WK' is phase leading the two-words clock signal WK, the detection output of "1" appears at the output terminal $Q_2$ of the flip-flop 36. Also, the counter 30 frequency-divides the carry output CA of the counter 29 by sixteen thereby producing the two-words clock signal WK'. A control to change the frequency-dividing ratio of the counter 29 is performed once in each period of the two-words clock signal WK', which is accomplished by the flip-flop 41. That is, when the output of the output terminal $Q_3$ of the flip-flop 41 during copying is "1", the flip-flops 35 or 36 compare the phase of the signals.

Referring to Figure 5, Figure 5A shows the master clock signal MK'. In the normal mode, the output of the AND gate 39 is "1" and the flip-flops 35 and 36 are cleared. Thus, the output of the NOR gate 42 is always "1". Accordingly, the preset inputs (abcd) of the counter 29 are always expressed as (1000). Since the counter 29 is a synchronizing presettable counter, when all output terminals $Q_A$ to $Q_D$ are made "1", the carry output CA becomes "1" thereby loading the preset input as the next master clock signal MK'. The frequency dividing ratio of the counter 29 in the normal mode will be 1/15. Also, the output at the output terminal $Q_3$ of the flip-flop 41 is "1".

If the switch 33 is moved to the copy side, the output of the AND gate 39 becomes "1" and the output of the AND gate 40 becomes "1" thereby placing the flip-flops 35 and 36 into the operating mode. By way of example, as shown in Figures 5B and 5C when the two-words clock signal WK' is phase lagging the two-words clock signal WK, the signal WK will be sampled at a rising edge of the signal WK' and as shown in Figure 5F, the output at the output terminal $Q_1$ of the flip-flop 35 becomes "1". Accordingly, the preset input "a" produced at the output of the NOR gate 42 becomes "0" as illustrated in Figure 5H. Outputs as shown in Figure 5D are produced at the output terminals $Q_A$ to $Q_D$ of the counter 29 and the output of the output terminal $Q_D$ is taken as the bit clock signal BKb'. When the output of the NOR gate 42 becomes "0", the preset input of the counter 29 is (0100). Thereafter, the carry output CA becomes "1" and the preset input is loaded at the next master clock signal MK' thereby producing an output coincident with this preset input at the output terminals $Q_A$ to $Q_D$ of the counter 29. Moreover, since the output ("0") of the NOR gate 42 is set in the flip-flop 41 by the falling edge of the carry output CA, the output at the output terminal $Q_3$ thereof becomes "0" as seen in Figure 5G whereby the output of the AND gate 39 becomes "0" and the flip-flops 35 and 36 are cleared. Hence, the output (Figure 5F) at the output terminal $Q_1$ of the flip-flop 35 becomes "0" and the output (Figure 5H) of the NOR gate 42 becomes "1". As described above, the preset input of the (0100) is loaded so that the counter 29 frequency-divides the clock signal by fourteen once and the next carry output CA loads the preset input of the (1000) so that the counter 29 is converted to a mode to frequency divide the clock signal by fifteen. $14+(15\times15)=239$ clock pulses of the master clock signal MK' which completes one cycle of operation and the phase of the two-words clock signal WK' is advanced by one clock pulse of the master clock signal MK'.

As shown by a broken line in Figure 5B, if the clock WK' is phase leading the two-words clock signal WK, the clock $\overline{WK}$ (="1") is sampled at the rising edge of the clock $\overline{WK}$, and the output at the output terminal $Q_2$ of the flip-flop 36 becomes "1" as shown in Figure 5I. Accordingly, the output of the NOR gate 42 becomes "0". Moreover, since the clock WK is made "0" at the rising edge of the clock WK′, the output at the output terminal $Q_1$ of the flip-flop 35 is made "0". For this reason, the preset input (abcd) is (0000) and is loaded in synchronism with the master clock signal MK′ and then the carry output CA becomes "1". Therefore, the counter 29 frequency-divides the clock signal by sixteen and when the output at the output terminal $Q_3$ of the flip-flop 41 becomes "0", the counter 29 is switched to the mode to frequency-divide the clock signal by fifteen. 16+(15×15)=241 clock pulses of the master clock signal MK′ completes one cycle of operation and the two-words clock signal WK′ will be phase lagging the master clock MK′ by one clock pulse.

As described above, until the two-words clock signal WK′ on the reproducing side is synchronized with the two-words clock signal WK on the recording side, the counter 29 continues to control the frequency-dividing ratio. In addition, although the bit clock signal BKb′ taken from the output terminal $Q_D$ of the counter 29 contains jitter of ±1/15(%) this will only be when the frequency-dividing ratio Nb is altered and the amount is too small to cause problems in the data processing in the reproducing circuit 21.

Also, in the example described above, there is provided the switch 33 in order to operate the digital phase comparator 32 only during copying. Figure 6 shows an example of circuitry in which the switch 33 is omitted. In Figure 6, a triggerable monostable multivibrator 44 is supplied with the two-words clock signal WK from a clock input terminal thereof and having a delay time of one period of the two-words clock signal WK, and through a switch 45 which is provided on the recording side and supplies the two-words clock signal WK to the terminal 37 of the reproducing side only during copying. The monostable multivibrator 44, during copying, when supplied with the two-words clock signal WK through the switch 45, produces an output of "1" at an output thereof which is supplied to the AND gate 39. Arrangements of other portions of the circuit in Figure 6 are not shown but are similar to those of Figure 4. As depicted above, in the construction in which the switch 33 is omitted, it is possible to reduce the number of terminals by one where the phase comparator 32 is formed as a large-scale integration circuit.

Thus, with the embodiment, since the clock signal synchronized with the reproduced data on the recording side is not formed by the analog PLL circuit including the VCO17 of Figure 2, the possibility that the phase lock will be lost by noise or the like can be reduced and digital copying with high quality is possible. In other words, in an initial condition where a switch of a voltage supply is turned ON or a mode is converted from "normal" to "copy", it is possible to compensate for phase deviation which will be caused by the fact that states of the counters of the recording and reproducing sides are not specified. In addition, when phase deviation is caused by noise or the like in the course of copying, such phase deviation can be compensated and synchronization of high accuracy can be achieved. Also, since a digital phase comparator is employed, the embodiment has an advantage that the system can easily be constructed using integrated circuit techniques.

**Claims**

1. A PCM signal recording and reproducing system comprising:

first signal processing means (1 to 7) for processing a recording signal into a predetermined PCM signal;

second signal processing means (18 to 24) for processing a reproduced PCM signal into said recording signal;

first clock signal generating means (27) for generating a master clock signal synchronized to said reproduced PCM signal;

second clock signal generating means (12 to 14) for generating at least one recording clock signal from said master clock signal, said recording clock signal being supplied to said first signal processing means (1 to 7); and

third clock signal generating means (28 to 31) for generating at least one reproducing clock signal from said master clock signal, said reproducing clock signal being supplied to said second signal processing means (18 to 24);

characterised by:

said second clock signal generating means (12 to 14) being supplied with said master clock signal in a copying mode and deriving therefrom said recording clock signal for supply to said first signal processing means (1 to 7), said second clock signal generating means (12 to 14) not including a phase locked loop;

first comparing means (32) for comparing the phases of said recording clock signal and said reproducing clock signal and for producing a control signal during said copying mode; and

said second or third clock signal generating means (12 to 14 or 28 to 31) including a first controllable frequency dividing means (12 to 14 or 28 to 31) for dividing said master clock signal and the dividing ratio being increased or decreased by said control signal so that said recording and reproducing clock signals are synchronized with each other.

2. A PCM signal recording and reproducing system according to claim 1 wherein said first controllable frequency dividing means (28 to 31) includes at least one dividing stage (28, 30, 31) which has a fixed dividing ratio, and at least one dividing stage (29) which has a controllable dividing ratio.

3. A PCM signal recording and reproducing system according to claim 2 wherein said at least one dividing stage (28, 30, 31) which has a fixed dividing ratio is a digital counter (28, 30, 31).

4. A PCM signal recording and reproducing system according to claim 2 wherein said dividing stage (29) with a controllable dividing ratio is a programmable digital counter (29).

5. A PCM signal recording and reproducing system according to claim 4 wherein said digital counter (29) which has a controllable dividing ratio includes at least two digital preset terminals, and said first comparing means (32) produces at least two digital preset signals which are supplied to said digital preset terminals.

6. A PCM signal recording and reproducing system according to claim 5 wherein said first comparing means (32) comprises at least two flip-flop circuits (35, 36).

7. A PCM signal recording and reproducing system according to claim 6 wherein a first switch means (45) is connected to one of said two flip-flop circuits (35, 36).

8. A PCM signal recording and reproducing system according to claim 6 further including a triggerable monostable circuit (44) connected to one of said two flip-flop circuits (35), said triggerable monostable circuit (44) forming a detector (44) for detecting whether said second or said third clock signal is supplied to said first comparing means (32) and connected for controlling said first comparing means (32) so that it is operative only when said second or third clock signal is supplied to said first comparing means (32).

9. A PCM signal recording and reproducing system according to claim 6 further including a third flip-flop circuit (41) in said first comparing means (32).

10. A PCM signal recording and reproducing system according to claim 1 wherein said second clock signal generating means (12 to 14) includes second frequency dividing means (12 to 14).

11. A PCM signal recording and reproducing system according to claim 10 wherein said second frequency dividing means (12 to 14) includes a plurality of dividing stages.

12. A PCM signal recording and reproducing system according to claim 1 wherein said first clock signal generating means (27) is a voltage controlled oscillator.

13. A PCM signal recording and reproducing system according to claim 12 further including a second comparing means (25) connected to said first controllable frequency dividing means (28 to 31), and a low-pass filter (26) connected between said second comparing means (25) and said voltage controlled oscillator (27).

14. A PCM signal recording and reproducing system according to claim 13 further comprising a master oscillator (9), second switch means (10) for selectively connecting the output of said master oscillator (9) to said second clock signal generating means (12 to 14) during a normal reproducing mode, a data separation circuit (20) for receiving a reproduced PCM signal and for supplying said reproduced PCM signal to said second signal processing means (21), said second comparator means (25) receiving inputs from said data separation circuit (20) and said second controllable frequency dividing means (20 to 31) and supplying an input to said variable frequency oscillator (27) to control its output frequency, the output of said variable frequency oscillator (27) being supplied through said second switch means (10) to said second clock signal generating means (12 to 14) during said copying mode.

15. A PCM signal recording and reproducing system according to claim 14 wherein said master oscillator (9) is a crystal oscillator.

16. A PCM signal recording and reproducing system according to claim 1 further comprising detecting means (44) for detecting whether said second or said third clock signal is supplied to said first comparing means (32) and connected for controlling said first comparing means (32) so that it is operative only when said second or third clock signal is supplied to said first comparing means (32).

**Patentansprüche**

1. PCM-Aufzeichnungs- und Wiedergabesystem für Pulscodemodulationssignale, mit

ersten Signalverarbeitungsmitteln (1 bis 7) zum Verarbeiten eines Aufzeichnungssignals zu einem vorbestimmten PCM-Signal,

zweiten Signalverarbeitungsmitteln (18 bis 24) zum Verarbeiten eines wiedergegebenen PCM-Signals zu dem Aufzeichnungssignal,

einem ersten Taktsignalerzeugungsmittel (27) zum Erzeugen eines Haupttaktsignals, das mit dem wiedergegebenen PCM-Signal synchronisiert ist,

zweiten Taktsignalerzeugungsmitteln (12 bis 14) zum Erzeugen zumindest eines Aufzeichnungstaktsignals aus dem Haupttaktsignal, welches Aufzeichnungstaktsignal den ersten Signalverarbeitungsmitteln (1 bis 7) zugeführt wird, und

dritten Taktsignalerzeugungsmitteln (28 bis 31) zum Erzeugen zumindest eines Wiedergabetaktsignals aus dem Haupttaktsignal, welches Wiedergabetaktsignal den zweiten Signalverarbeitungsmitteln (18 bis 24) zugeführt wird,

gekennzeichnet

dadurch, daß die zweiten Taktsignalerzeugungsmitteln (12 bis 14) mit dem Haupttaktsignal in einer Kopierbetriebsweise versorgt werden und daraus das Aufzeichnungstaktsignal zum Versorgen der ersten Signalverarbeitungsmittel (1 bis 7) gewinnen, wobei die zweiten Taktsignalerzeugungsmittel (12 bis 14) keine Phase-lockedloop-Schaltung enthalten,

durch ein ein erstes Vergleichsmittel (32) zum Vergleichen der Phasen des Aufzeichnungstaktsignals und des Wiedergabetaktsignals und zum Erzeugen eines Steuersignals während der Kopierbetriebsweise und

dadurch, daß die zweiten oder dritten Taktsignalerzeugungsmittel (12 bis 14 oder 28 bis 31) ein erstes steuerbares Frequenzteilungsmittel (12 bis 14 oder 28 bis 31) zum Teilen des Haupttaktsignals enthalten und das Teilungsverhältnis durch das Steuersignal erhöht oder erniedrigt wird, so daß die Wiedergabe- und Aufzeichnungstaktsignale miteinander synchronisiert sind.

2. PCM-Aufzeichnungs- und Wiedergabesystem nach Anspruch 1, bei dem das erste steuerbare Frequenzteilungsmittel (28 bis 31) zumindest eine Teilungsstufe (28, 30, 31), die ein festes Teilungsverhältnis hat, und zumindest eine Teilungsstufe (29), die ein steuerbares Teilungsverhältnis hat, enthält.

3. PCM-Aufzeichnungs- und Wiedergabesystem nach Anspruch 2, bei dem die zumindest eine Teilungsstufe (28, 30, 31), die ein festes Teilungsverhältnis hat, ein digitaler Zähler (28, 30, 31) ist.

4. PCM-Aufzeichnungs- und Wiedergabegerät nach Anspruch 2, bei dem die Teilungsstufe (29), die ein steuerbares Teilungsverhältnis hat, ein programmierbarer digitaler Zähler (29) ist.

5. PCM-Aufzeichnungs- und Wiedergabesystem nach Anspruch 4, bei dem der digitale Zähler (29), der ein steuerbares Teilungsverhältnis hat, zumindest zwei digitale Voreinstelleingänge hat und das erste Vergleichsmittel (32) zumindest zwei digitale Voreinstellsignale erzeugt, die den digitalen Voreinstelleingängen zugeführt werden.

6. PCM-Aufzeichnungs- und Wiedergabesystem nach Anspruch 5, bei dem das erste Vergleichsmittel (32) zumindest zwei Flipflop-Schaltungen (35, 36) enthält.

7. PCM-Aufzeichnungs- und Wiedergabesystem nach Anspruch 6, bei dem ein erstes Schaltmittel (45) mit einer der zwei Flipflop-Schaltungen (35, 36) verbunden ist.

8. PCM-Aufzeichnungs- und Wiedergabesystem nach Anspruch 6, das desweiteren eine triggerbare monostabile Schaltung (44) enthält, die mit einer der zwei Flipflop-Schaltungen (35) verbunden ist, wobei die triggerbare monostabile Schaltung (44) einen Detektor (44) zum Erfassen, ob dem ersten Vergleichsmittel (32) das zweite oder das dritte Taktsignal zugeführt wird, bildet und derart zum Steuern des ersten Vergleichsmittels (32) angeschlossen ist, daß es nur betriebsfähig ist, wenn dem ersten Vergleichsmittel (32) das zweite oder dritte Taktsignal zugeführt wird.

9. PCM-Aufzeichnungs- und Wiedergabesystem nach Anspruch 6, das desweiteren eine dritte Flipflop-Schaltung (41) in dem ersten Vergleichsmittel (32) enthält.

10. PCM-Aufzeichnungs- und Wiedergabesystem nach Anspruch 1, bei dem das zweite Takterzeugungsmittel (12 bis 14) ein zweites Frequenzteilungsmittel (12 bis 14) enthält.

11. PCM-Aufzeichnungs- und Wiedergabesystem nach Anspruch 10, bei dem das zweite Frequenzteilungsmittel (12 bis 14) eine Vielzahl von Teilungsstufen enthält.

12. PCM-Aufzeichnungs- und Wiedergabesystem nach Anspruch 1, bei dem das erste Taktsignalerzeugungsmittel (27) ein spannungsgesteuerter Oszillator ist.

13. PCM-Aufzeichnungs- und Wiedergabesystem nach Anspruch 12, das desweiteren ein zweites Vergleichsmittel (25), das mit dem ersten steuerbaren Frequenzteilungsmittel (28 bis 31) verbunden ist, und ein Tiefpaßfilter (26), das zwischen das zweite Vergleichsmittel (25) und den spannungsgesteuerten Oszillator (27) geschaltet ist, enthält.

14. PCM-Aufzeichnungs- und Wiedergabesystem nach Anspruch 13, das desweiteren einen Hauptoszillator (9), ein zweites Schaltmittel (10) zum wahlweisen Verbinden des Ausgangs des Hauptoszillators (9) mit den zweiten Taktsignalerzeugungsmitteln (12 bis 14) während einer normalen Wiedergabebetriebsweise sowie eine Datentrennschaltung (20) zum Aufnehmen eines wiedergegebenen PCM-Signals und zum Anlegen des wiedergegebenen PCM-Signals an das zweite Signalverarbeitungsmittel (21) enthält, wobei das zweite Vergleichsmittel (25) Eingangssignale von der Datentrennschaltung (20) und dem zweiten steuerbaren Frequenzteilungsmittel (28 bis 31) aufnimmt und ein Eingangssignal an den variablen Frequenzoszillator (27) legt, um dessen Ausgangsfrequenz zu steuern, wobei das Ausgangssignal des variablen Frequenzoszillators (27) während der Kopierbetriebsweise durch das zweite Schaltmittel (10) an das zweite Taktsignalerzeugungsmittel (12 bis 14) gelegt wird.

15. PCM-Aufzeichnungs- und Wiedergabesystem nach Anspruch 14, bei dem der Hauptoszillator (9) ein Quarzoszillator ist.

16. PCM-Aufzeichnungs- und Wiedergabesystem nach Anspruch 1, das desweiteren ein Erfassungsmittel (44) zum Erfassen, ob das zweite oder das dritte Taktsignal an das erste Vergleichsmittel (32) gelegt wird, enthält, das zum Steuern des ersten Vergleichsmittels (32) derart angeschlossen ist, daß es nur betriebsfähig ist, wenn dem ersten Vergleichsmittel (32) das zweite oder dritte Taktsignal zugeführt wird.

**Revendications**

1. Système d'enregistrement et de reproduction de signal à modulation par impulsions codées (MIC) comprenant:

un premier moyen de traitement de signal (1 à 7) pour traiter un signal d'enregistrement en un signal MIC prédéterminé;

un second moyen de traitement de signal (18 à 24) pour traiter un signal MIC reproduit en le signal d'enregistrement;

un premier moyen de génération de signal d'horloge (27) pour produire un signal d'horloge principal synchronisé avec le signal MIC reproduit;

un second moyen de génération de signal d'horloge (12 à 14) pour produire au moins un signal d'horloge d'enregistrement à partir du signal d'horloge principal, ce signal d'horloge d'enregistrement étant fourni au premier moyen de traitement de signal (1 à 7); et

un troisième moyen de génération de signal d'horloge (28 à 31) pour produire au moins un signal d'horloge de reproduction à partir du signal d'horloge maître, ce signal d'horloge de reproduction étant fourni au second moyen de traitement de signal (18 à 24);

caractérisé par:

le second moyen de génération de signal d'horloge (12 à 14) étant alimenté par le signal d'horloge principal dans un mode de copie et en dérivant le signal d'horloge d'enregistrement pour le fournir au premier moyen de traitement de signal (1 à 7), ce second moyen de génération de signal d'horloge (12 à 14) ne comprenant pas de boucle verrouillée en phase;

un premier moyen de comparaison (32) pour comparer les phases du signal d'horloge d'enregistrement et du signal d'horloge de reproduction et pour produire un signal de commande pendant le mode de recopie; et

le second ou le troisième moyen de génération de signal d'horloge (12 à 14 ou 28 à 31) comprenant un premier moyen diviseur de fréquence commandable (12 à 14 ou 28 à 31) pour diviser le signal d'horloge maître, le rapport de division étant augmenté ou réduit par le signal de commande de sorte que les signaux d'horloge d'enregistrement et de reproduction sont synchronisés l'un avec l'autre.

2. Système d'enregistrement et de reproduction de signal MIC selon la revendication 1, dans lequel le premier moyen diviseur de fréquence contrôlable (28 à 31) comprend au moins un étage diviseur (28, 30, 31) qui a un rapport de division fixe, et au moins un étage diviseur (29) qui a un rapport de division commandable.

3. Système d'enregistrement et de reproduction de signal MIC selon la revendication 2, dans lequel ledit au moins un étage diviseur (28, 30, 31) qui a un rapport de division fixe est un compteur numérique (28, 30, 31).

4. Système d'enregistrement et de reproduction de signal MIC selon la revendication 2, dans lequel l'étage diviseur (29) de rapport de division commandable est un compteur numérique programmable (29).

5. Système d'enregistrement et de reproduction de signal MIC selon la revendication 4, dans lequel ledit compteur numérique (29) qui présente un rapport de division commanable comprend au moins deux bornes numériques de préréglage, et en ce que le premier moyen de comparaison (32) produit au moins deux signaux numériques de préréglage qui sont fournis aux bornes numériques de préréglage.

6. Système d'enregistrement et de reproduction de signal MIC selon la revendication 5 dans lequel le premier moyen de comparaison (32) comprend au moins deux circuits de bascule (35, 36).

7. Système d'enregistrement et de reproduction de signal MIC selon la revendication 6, dans lequel un premier moyen de commutation (45) est connecté à l'un des deux circuits de bascule (35, 36).

8. Système d'enregistrement et de reproduction de signal MIC selon la revendication 6, comprenant en outre un circuit monostable déclenchable (44) connecté à l'un des deux circuits de bascule (35), ce circuit monostable déclenchable (44) formant un détecteur (44) pour détecter si le second ou le troisième signal d'horloge est fourni au premier moyen de comparaison (32) et connecté pour commander le premier moyen de comparaison (32), de sorte qu'il est actif seulement quand le second ou le troisième signal d'horloge est fourni audit premier moyen de comparaison (32).

9. Système d'enregistrement et de reproduction de signal MIC selon la revendication 6, comprenant en outre un troisième circuit de bascule (41) dans le premier moyen de comparaison (32).

10. Système d'enregistrement et de reproduction de signal MIC selon la revendication 1, caractérisé en ce que le second moyen de génération de signal d'horloge (12 à 14) comprend un second moyen de division de fréquence (12 à 14).

11. Système d'enregistrement et de reproduction de signal MIC selon la revendication 10, dans lequel le second moyen de division de fréquence (12 à 14) comprend une pluralité d'étages diviseurs.

12. Système d'enregistrement et de reproduction de signal MIC selon la revendication 1, dans lequel le premier moyen de génération de signal d'horloge (27) est un oscillateur à fréquence commandée par la tension.

13. Système d'enregistrement et de reproduction de signal MIC selon la revendication 12, comprenant en outre un second moyen de comparaison (25) connecté au premier moyen diviseur de fréquence commandable (28 à 31) et un filtre passe-bas (26) connecté entre le second moyen de comparaison (25) et l'oscillateur à fréquence commandée par la tension (27).

14. Système d'enregistrement et de reproduction de signal MIC selon la revendication 13, comprenant en outre un oscillateur maître (9), un second de commutation (10) pour connecter sélectivement la sortie de l'oscillateur maître (9) aux seconds moyens de génération de signal d'horloge (12 à 14) pendant un mode de reproduction normale, un circuit de séparation de données (20) pour recevoir un signal MIC reproduit et pour fournir le signal MIC reproduit au second moyen de traitement de signal (21), le second moyen de comparaison (25) recevant des entrées à partir du circuit de séparation de données (20) et du second moyen de division de fréquence commandable (28 à 31) et fournissant une entrée à l'oscillateur à fréquence variable (27) pour commander sa fréquence de sortie, la sortie de l'oscillateur à fréquence variable (27) étant fournie par l'intermédiaire du second moyen de commutation (10) au second moyen de génération de signal d'horloge (12 à 14) pendant le mode de recopie.

15. Système d'enregistrement et de reproduction de signal MIC selon la revendication 14, dans lequel l'oscillateur maître (9) est un oscillateur à quartz.

16. Système d'enregistrement et de reproduction de signal MIC selon la revendication 1, comprenant en outre un moyen de détection (44) pour détecter si le second ou le troisième signal d'horloge est fourni au premier moyen de comparaison (32) et étant connecté pour commander le premier moyen de comparaison (32) de sorte qu'il est actif seulement quand le second ou le troisième signal d'horloge est fourni au premier moyen de comparaison (32).

0 052 519

F I G. 1A

| An | Bn -3D | An+1 -6D | Bn+1 -9D | An+2 -12D | Bn+2 -15D | Pn -18D | Qn -21D | CRC Code |

|-------- 14 X 8 = 112 Bits --------|

16 Bits

F I G. 1B

Content Discrimination

Control

| Cue Signal | | Address | | CRC Code |

|--- 56 Bits ---|--- 28 Bits ---|

14 Bits   14 Bits  16 Bits

|--------- 128 Bits ---------|

F I G. 1C

White Reference Signal

Data Synchronizing Signal

HD

| 13 | 13 | 4 |--- 128 Bits (1 Block) ---| 10 | HD

|------ 168 Bits (1 H) ------|

F I G. 1D

Odd Numbered Field

VD

| 3 | 3 | 3 | |--- 245 H (Data Interval) ---| 7.5 |

262.5H ( 1V )

F I G. 1E

Even Numbered Field

VD

| 3 | 3 | 3.5 | |--- 245 H (Data Interval) ---| 7 |

262.5H ( 1V )

FIG. 2

FIG. 3

0 052 519

FIG. 4

FIG. 6

4

FIG. 5A (MK')
FIG. 5B (WK)
FIG. 5C (WK')

FIG. 5D (29)
(QA)
(QB)
(QC)
(QD)
(BK b')

FIG. 5E (CA)

15 Frequency Divider | 14 Frequency Divider | 15 Frequency Divider

FIG. 5F (Q1)
FIG. 5G (Q3)
FIG. 5H (a)

FIG. 5I (Q2)

FIG. 5J (29)
(QA)
(QB)
(QC)
(QD)
(BK b')

FIG. 5K (CA)

15 Frequency Divider | 16 Frequency Divider | 15 Frequency Divider

0 052 519